**Europäisches Patentamt**

**European Patent Office**

**Office européen des brevets**

(19)

(11) Publication number : **0 289 065 B1**

(12)

# EUROPEAN PATENT SPECIFICATION

(45) Date of publication of patent specification :
19.02.92 Bulletin 92/08

(51) Int. Cl.⁵ : **B60H 1/24, F24F 13/075**

(21) Application number : **88200556.4**

(22) Date of filing : **24.03.88**

(54) Air vent, in particular for cars.

(30) Priority : **01.04.87 IT 1993087**

(43) Date of publication of application :
**02.11.88 Bulletin 88/44**

(45) Publication of the grant of the patent :
**19.02.92 Bulletin 92/08**

(84) Designated Contracting States :
**DE FR GB**

(56) References cited :
**EP-A- 0 192 110**
**EP-A- 0 195 343**
**GB-A- 1 375 823**
**GB-A- 2 107 854**
**PATENT ABSTRACTS OF JAPAN, vol. 10, no.
55 (M-458)[2112], 5th March 1986
IDEM
PATENT ABSTRACTS OF JAPAN, vol. 9, no.
176 (M-398)[1899], 20th July 1985**

(73) Proprietor : **FIAT AUTO S.p.A.**
**Corso Giovanni Agnelli 200**
**I-10135 Torino (IT)**

(72) Inventor : **Villa, Ezio**
**Via Martiri della Libertà 2**
**I-20020 Arese Milan (IT)**
Inventor : **Guelfi, Giorgio**
**Via Medardo Rosso 16**
**I-20159 Milan (IT)**
Inventor : **Dessardo, Giovanni**
**Via Lessona 6**
**I-20157 Milan (IT)**

(74) Representative : **De Carli, Erberto et al**
**ING. BARZANO' & ZANARDO MILANO S.p.A.**
**Via Borgonuovo, 10**
**I-20121 Milano (IT)**

Jouve, 18, rue Saint-Denis, 75001 PARIS

## Description

Generally, air vents of the passenger compartment of cars are dimensioned in such a way that the amount of air entering due to the effect of the dynamic pressure is sufficient in case of medium vehicle speeds, and is not excessive at maximum vehicle speeds, in order to prevent intense air jets and troublesome air streams to be formed.

Furthermore, the positioning of the air vents is so studied, as to make it possible to carry out individual adjustements in ventilation and air temperature in the different areas of the passenger compartment.

Several types of air vents are known; in the most common of them, the vanes, which constitute the elements for controlling the direction of the air stream, are supported by a movable, cylindrical, or partially spherical, or rectangular frame, which is rotatably installed inside the relevant duct, at the air outlet port.

Generally, the vanes are hinged on the movable frame in such a way that they can be rotated as desired, both relatively to this latter, and integrally together with it, in order to adjust the air outflow direction.

In air vents of rectangular shape, the frame can rotate around a substantially horixontal axis and supports two sets of vanes, one of which is practically horizontal, and the other of which is practically vertical; in most cases, the first ones are integral with the same frame, and the second ones are rotatable relatively to it, so that the air stream direction can be adjusted inside a substantially pyramidal volume; in the cylindrical air vents, and in the partially spherical air vents, the adjustment volume is substantially conical.

The choking of the air stream, at the ports through which air enters the air vents, is achieved by means of butterfly valves, which can be actuated as desired.

The air vent types known from the prior art, with a movable frame, not always do represent the optimum solution from the functional viewpoint and from the aesthetical viewpoint, in particular if air vents are desired, which have rather large outlet ports, so that the air outflow is relatively slow, and the resistance offered to air passage is small.

Air vents are also known in which the vanes are not supported by a movable frame, but are supported directly by stationary parts of the body of the vent. An air vent of this kind and having the features of the preamble of claim 1 is known from EP-A-0 192 110.

In this known air vent, the movable vanes are arranged behind a set of fixed vanes extending frontally across the outlet port of the air vent body, so that the movable vanes are hidden from outside and their different orientation for providing the desired air outflow direction does not influence the external configuration of the air vent.

However, this construction requires a double arrangement of parallel vanes, increasing costs and dimensions of the air vent, and above all has the drawback that the air directed by the inclined movable vanes toward the outside of the air vent first impinges against the fixed vanes and is then deviated thereby to finally exit substantially parallel to the latter, without that an effective orientation of the air stream is obtained.

The purpose of the present invention is to provide an air vent which can be adapted to different needs, as regards size and positioning, and which makes it possible to adjust the air flow in an optimum way, while having a rather simple structure.
This purpose is achieved by an air vent having the features claimed in claim 1.

A so-structured air vent is very satisfactory from several viewpoints, but in particular as regards the requirements of functionality, aesthetical characteristics, structural simpleness.

Characteristics and advantages of the invention are now illustrated with reference to the hereto attached Figures 1-7, wherein for purely exemplifying, non-limitative purposes, a preferred form is shown of practical embodiment of the same invention.

Figure 1 shows a perspective view of the dashboard of a car equipped with air vents according to the invention,
Figure 2 shows a front view, and Figure 3 shows a top view, of one of the air vents shown in Figure 1;
Figures 4, 5, 6, 7 are sectional views respectively according to the path planes IV-IV, V-V, VI-VI, VII-VII, of Figure 2.

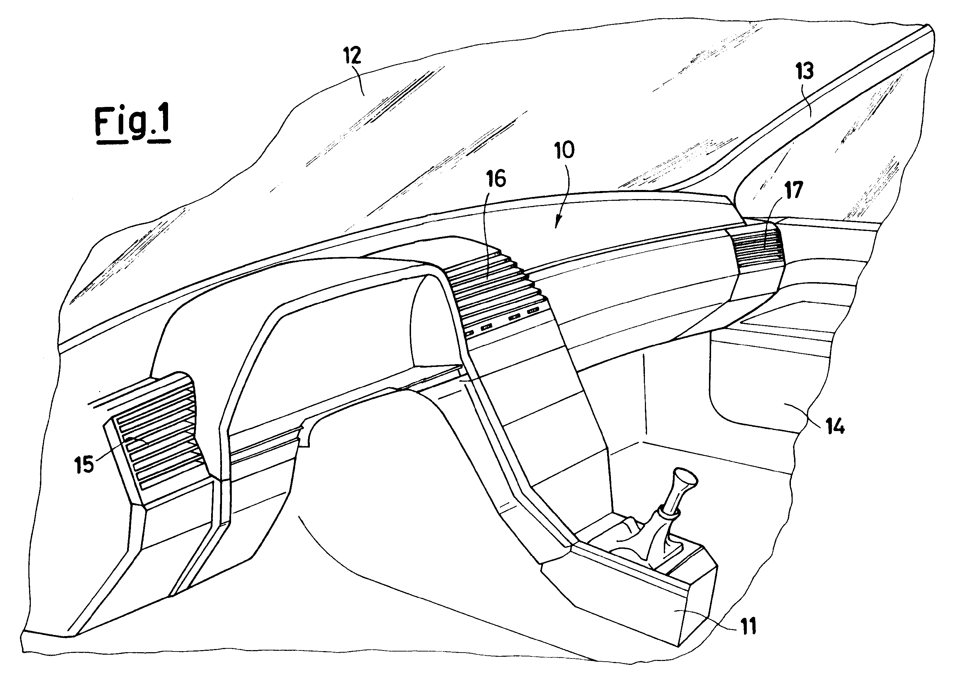

In Figure 1, the passenger compartment of a car, with the dashboard 10, a central console 11, the windshield 12, the front right-hand upright, and the front right-hand door 14, is partially shown.

The dashboard 10 is equipped with air vents 15, 16, 17; of these, the central one, i.e., the air vent 16, is shown in detail in the following figures.

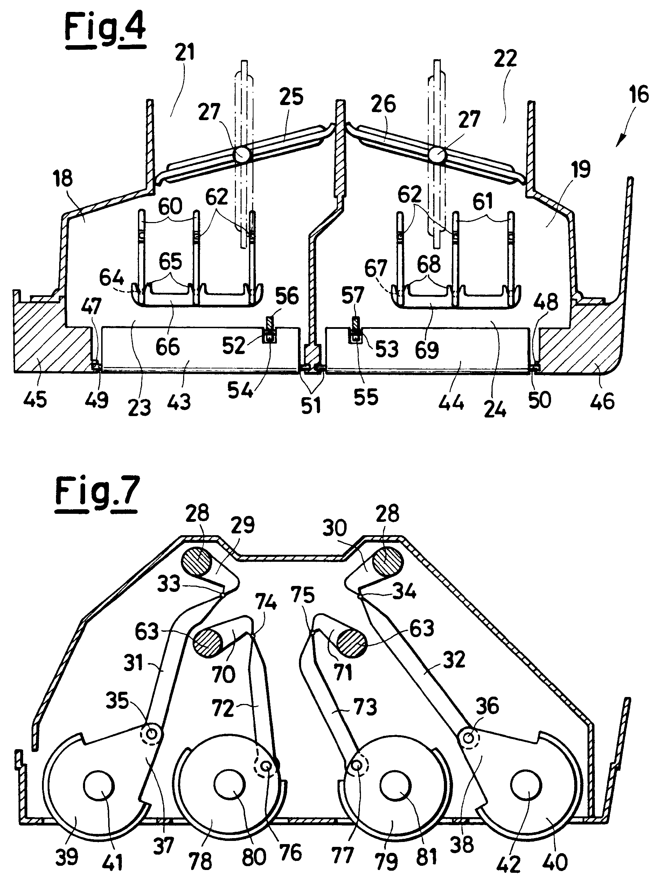

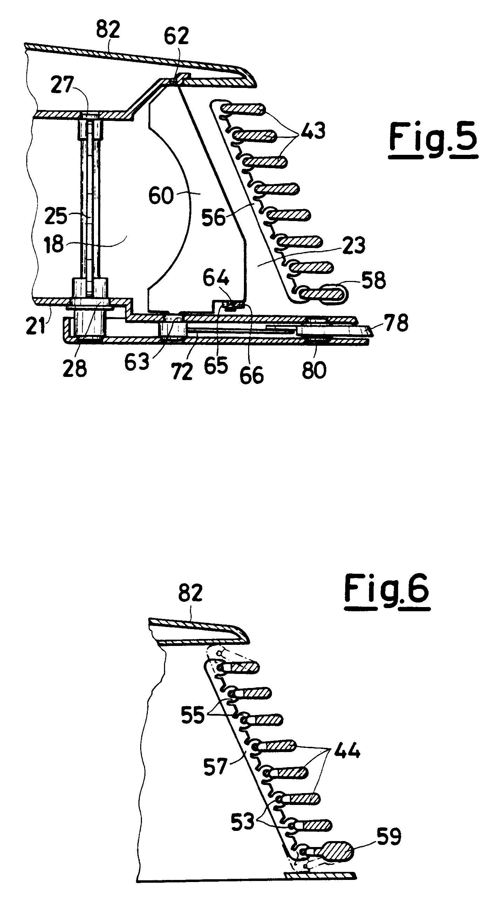

Inside the body of the air vent 16, two air flow ducts, or chambers, 18 and 19, are provided, which are clearly visible in Figures 4 and 5; the two ducts 18 and 19 have a circular cross-section at the air inlet ports 21 and 22, whilst they have a substantially rectangular cross-section at the air outlet ports 23 and 24.

Inside the inlet ports 21 and 22, two choking butterfly valves 25 and 26, of circular shape, are provided; the valves 25 and 26 are vertically hinged in the ducts 18 and 19 by means of pivots 27 and 28, visible in Figure 5.

With the pivots 28 of the butterfly valves 25 and 26, respective cranks 29 and 30, visible in Figure 7, are integral; in their turn, said cranks 29 and 30 are linked to rods 31 and 32 by means of thin-wall (film) hinges 33 and 34.

The rods 31 and 32 are hinged at 35 and 36 to cranks 37 and 38, manufactured as a single piece with control wheels 39 and 40.

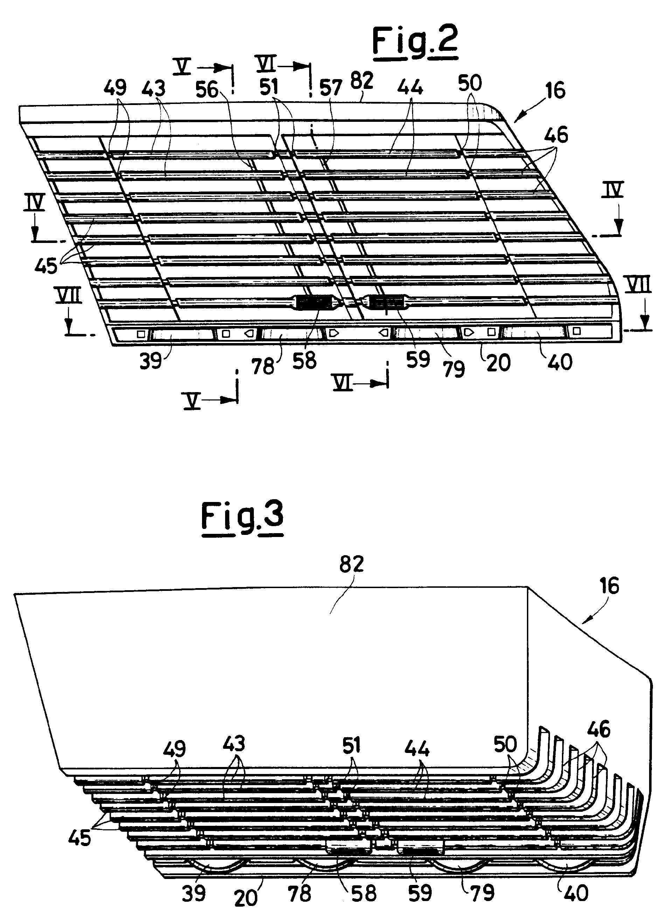

The control wheels 39 and 40, also visible in Figures 2 and 3, are rotatably supported at 41 and 42 inside a hollow defined by the bottom wall of ducts 18 and 19, and a covering wall 20.

At the outlet ports 23 and 24 of the air vent 16, two central rows of movable, substantially horizontal vanes 43 and 44 are arranged, and two rows of stationary, also susbstantially horizontal vanes 45 and 46, clearly visible in Figures 2 and 3, are formed laterally.

As it results from the Figures, the stationary vanes correspond in number to the number of movable vanes and are lined-up therewith, and the rows of stationary vanes and movable vanes partially form the same outer walls of the air vents, in particular the stationary vanes 46, which, by having an "L"-shape, form a corner of the body of the air vent.

In the stationary vanes 45 and 46, seats 47 and 48 are provided, wherein the movable vanes 43 and 44 are pivotally supported, at the front edge thereof by pivots 49 and 50 whilst pivots 51, which link each pair of vanes 43 and 44, are rotatably supported by the wall which separates the duct 18 from the duct 19.

The vanes 43 are provided, in their rear side, with respective pivots 52, which are snapwise housed inside corresponding hollows, indicated by the reference numeral 54, of a link rod 56; also the vanes 44 are provided in their rear side with respective pivots 53, which are snapwise housed inside respective slots, indicated by the reference numeral 55, of a link rod 57 (see Figure 6).

Thus, the link rods 56 and 57 mutually connect the vanes 43 and 44 of a row and while they move upwards or downwards, as shown by the chain lines in Figure 6, the rows of vanes 43 and 44 are simultaneously orientated, respectively downwards and upwards. The orientation of the movable vanes is manually controlled by means of roller-like appendices 58 and 59, respectively integral with one of the vanes 43 and 44 and each provided with surface splines.

Inside the ducts 18 and 19, upstream the rows of vanes 43, 44, 45, 46, two sets of baffles 60 and 61 are installed, each of which is vertically hinged inside the respective duct 18 or 19, by means of pivots 62 and 63, visible in Figure 5, so that the baffles 60 and 61 are pivotally supported about respective axes extending substantially perpendicularly to the extension of the movable vanes 43 and 44.

The baffles 60 are provided with respective pivots 64, which are snapwise housed inside corresponding hollows 65 of a link rod 66 interconnecting the baffles 60, and also the baffles 61 are provided with respective pivots 67, which are snapwise housed inside the corresponding hollows 68 of a link rod 69 interconnecting the baffles 61 (see Figure 4).

With the pivots, like that indicated by the reference numeral 63, of a pair of baffles 60 and 61, respective cranks 70 and 71 are integral, which can be seen in Figure 7 and which are hinged, in their turn, to rods 72 and 73 by means of thin-wall (film) hinges 74 and 75.

The rods 72 and 73 are hinged at 76 and 77 to control wheels 78 and 79, which are in their turn vertically pivoted, at 80 and 81, to the bottom wall of the air vent and to the cover wall 20, as it results from Figure 7. Atop, the air vent 16 has a cover wall, indicated by the reference numeral 82.

The air outflow direction is vertically adjusted by orientating upwards or downwards the rows of vanes 43 and 44, by means of the roller appendices 58 and 59; whilst the air outflow direction is horizontally adjusted by orientating to the right or to the left the sets of baffles 60 and 61, by means of the wheels 78 and 79.

The amount of air exiting the air vent 10 is adjusted by opening or closing the butterfly valves 25 and 26, by means of the control wheels 39 and 40.

From the hereinabove disclosure, it is clear that the proposed air vent is reduced to the essence from a structural viewpoint, is very functional and is original, also due to the fact that the rows of stationary vanes and of movable vanes partially form the same outer walls of the air vent. Furthermore, the structure is such as to adapt itself to different shapes, according to the requirements.

**Claims**

1. Air vent, in particular for the passenger compartment of cars, comprising a body defining at least one duct (18, 19) having an air inlet port (21,22) and an air outlet port (23,24), movable elements (43,44) for controlling and adjusting the direction of the air stream at said outlet port (23,24), and choking means (25,26) for the air at said inlet port (21, 22), wherein said movable elements comprise at least one row of movable vanes (43,44) pivotally supported by stationary parts of said duct (18,19) at said outlet port (23,24) and mutually interconnected by at least one link rod (56,57) for simultaneously operating all the movable vanes (43,44) of the row by first drive means (58,59), and at least one set of baffles (60,61) arranged substantially perpendicularly to said movable vanes (43,44) upstream thereof and pivotally supported by stationary parts of said duct (18,19) about respective axes extending substantially perpendicularly to the extension of said movable vanes (43,44), said baffles (60, 61) being interconnected by at least on link rod (66,69) operatively connected to second drive means (78,79), characterized in that said duct (18,19) forms at said outlet port (23,24) at least one row of laterally arranged stationary vanes (45, 46) corresponding in number to the number of said movable vanes (43,44) and lined-up therewith, and in that said stationary vanes (45,46) define support brackets for pivotally supporting said movable vanes (43,44) at the front edge thereof.

2. Air vent according to claim 1, characterized in that said first drive means comprise at least one roller-like appendix (58,59) integral with one of the movable vanes (43,44) of a row at the front edge thereof.

3. Air vent according to claim 1 or 2, characterized in that said stationary vanes (45,46) are substantially "L"-shaped and form a corner of the body of the air vent.

## Patentansprüche

1. Belüftung, insbesondere für den Fahrgastraum von Fahrzeugen, mit einem wenigstens einen Kanal (18,19) Körper mit einer Lufteintrittsöffnung (21,22) und einer Luftaustrittsöffnung (23,24) definierenden Körper, mit bewegbaren Elementen (43,44) zur Regelung und Steuerung der Richtung des Luftstromes an der Auslaßöffnung (23,24) und mit Absperrmitteln (25,26) für die Luft an der Einlaßöffnung (21,22), wobei die bewegbaren Elemente wenigstens eine Reihe bewegbarer Klappen (43,44) umfassen, welche schwenkbar an stationären Teilen des Kanals (18,19) an der Austrittsöffnung (23,24) abgestützt sind und durch wenigstens eine Verbindungsstange (56,57) für eine gleichzeitige Betätigung aller bewegbarer Klappen (43,44) der Reihe durch erste Antriebsmittel (58,59) miteinander gekoppelt sind, wobei wenigstens ein Satz von Drosseln bzw. Ablenkelementen (60,61) im wesentlichen normal auf die bewegbaren Klappen (43,44) stromaufwärts derselben angeordnet ist und an stationären Teilen des Kanals (18,19) um entsprechende, im wesentlichen normal auf die Erstreckung der bewegbaren Klappen (43,44) stehende Achsen schwenkbar abgestützt ist, wobei die Drosseln (60,61) über wenigstens eine mit zweiten Antriebsmitteln (78,79) antreibbar verbundene Verbindungsstange (66,69) miteinander gekoppelt sind, dadurch gekennzeichnet, daß der Kanal (18,19) an seiner Auslaßöffnung (23,24) wenigstens eine Reihe von seitlich angeordneten, stationären Klappen (45,46) ausbildet, deren Anzahl der Anzahl der bewegbaren Klappen (43,44) entspricht und mit welchen diese ausgerichtet sind, und daß die stationären Klappen (45,46) Supportklammern für die schwenkbare Abstützung der bewegbaren Klappen (43,44) an ihren Vorderkanten definieren.

2. Belüftung nach Anspruch 1, dadurch gekennzeichnet, daß die ersten betriebsmittel wenigstens einen rollenartigen Fortsatz (58,59) aufweisen, welcher mit einer der bewegbaren Klappen (43,44) einer Reihe an ihrer Vorderkante verbunden ist.

3. Belüftung nach Anspruch 1 oder 2, dadurch gekennzeichnet, daß die stationären Klappen (45,46) im wesentlichen L-förmig ausgebildet sind und eine Ecke des Körpers der Belüftung bilden.

## Revendications

1. Buse d'aération, en particulier pour le compartiment passager des véhicules automobiles, comprenant un corps définissant au moins une conduite (18, 19) comportant un orifice d'entrée d'air (21, 22) et un orifice de sortie d'air (23, 24), des éléments mobiles (43, 44) pour contrôler et régler la direction du courant d'air au niveau dudit orifice de sortie (23, 24), et des moyens d'étranglement (25, 26) pour l'air au niveau dudit orifice d'entrée (21, 22), dans laquelle lesdits éléments mobiles comprennent au moins une rangée d'ailettes mobiles (43, 44) supportées à pivotement par des parties fixes de ladite conduite (18, 19) au niveau dudit orifice de sortie (23, 24) et reliées mutuellement par au moins une biellette articulée (56, 57) pour actionner simultanément toutes les ailettes mobiles (43, 44) de la rangée par des premiers moyens d'actionnement (58, 59), et au moins une série de chicanes (60, 61) disposées sensiblement perpendiculairement auxdites ailettes mobiles (43, 44) en amont de celles-ci et supportées à pivotement par des parties fixes de ladite conduite (18, 19) autour d'axes respectifs qui s'étendent sensiblement perpendiculairement auxdites ailettes mobiles (43, 44), lesdites chicanes (60, 61) étant reliées entre elles par au moins une biellette articulée (66, 69) reliée pour l'actionnement à des seconds moyens d'actionnement (78, 79), caractérisée en ce que ladite conduite (18, 19) forme au niveau dudit orifice de sortie (23, 24) au moins une rangée d'ailettes fixes (45, 46) agencées latéralement dont le nombre correspond au nombre desdites ailettes mobiles (43, 44) et qui sont réglées avec celles-ci, et en ce que lesdites ailettes fixes (45, 46) définissent des supports pour supporter à pivotement lesdites ailettes mobiles (43, 44) au niveau de leur bord frontal.

2. Buse d'aération selon la revendication 1, caractérisée en ce que lesdits premiers moyens d'actionnement comprennent au moins un appendice (58, 59) en forme de cylindre solidaire de l'une des ailettes mobiles (43, 44) d'une rangée au niveau de son bord frontal.

3. Buse d'aération selon la revendication 1 ou 2, caractérisée en ce que lesdites ailettes fixes (45, 46) sont sensiblement en forme de "L" et forment un angle du corps de la buse d'aération.

Fig.1

## Fig.2

## Fig.3

# Fig.4

# Fig.7

Fig.5

Fig.6